# EUROPÄISCHE PATENTSCHRIFT

(11) **EP 1 068 919 B1**
(45) Veröffentlichungstag und Bekanntmachung des Hinweises auf die Patenterteilung: **25.02.2004**
(21) Anmeldenummer: 00810560.3
(22) Anmeldetag: 26.06.2000
(51) Int. Cl.: B23B 31/22, B23B 31/30, B23Q 16/10

(54) **Einrichtung zum positionsdefinierten Aufspannen eines Werkstücks im Arbeitsbereich einer Bearbeitungsmaschine**
Device to clamp a workpiece in a definite position in a working area of a machine tool
Dispositif de serrage d'une pièce dans une position definie dans une zône de travail d'une machine d'usinage

(30) Priorität: 14.07.1999 CH 129399
(43) Veröffentlichungstag der Anmeldung: 17.01.2001
(73) Patentinhaber: Erowa AG, CH-5734 Reinach (CH)
(72) Erfinder: Lüscher, Marcel, 5600 Lenzburg (CH); Fries, Karl, 5734 Reinach (CH)
(74) Vertreter: Rottmann, Maximilian R.

(56) Entgegenhaltungen:
- EP-A- 0 922 529
- DE-A- 2 413 778
- DE-A- 3 705 123
- DE-A- 3 713 023
- DE-U- 9 203 992
- US-A- 3 386 315

## Beschreibung

Die vorliegende Erfindung bezieht sich auf eine Einrichtung zum positionsdefinierten Aufspannen eines Werkstücks im Arbeitsbereich einer Bearbeitungsmaschine, mit einem im Arbeitsbereich der Bearbeitungsmaschine zu fixierenden Spannfutter und einem auf das Spannfutter aufsetzbaren und daran festzuspannenden werkstückträger nach dem Oberbegriff des Anspruchs 1.

Derartige Einrichtungen sind bekannt und dienen vornehmlich dazu, zu bearbeitende Werkstücke mit hoher Präzision in eine Bearbeitungsmaschine einzuspannen. Namentlich soll insbesondere auch die Repetiergenauigkeit der Einspannung gewährleistet sein. Mit anderen Worten, das auf dem Werkstückträger befestigte Werkstück soll wiederholt auf einem an den Werkstückträger angepassten Spannfutter eingespannt werden können und dabei stets die genau definierte Soll-Lage in X-Richtung, in Y-Richtung, In Z-Richtung sowie bezüglich der Winkelausrichtung um die Z-Achse einnehmen, z.B. dann, wenn der Werkstückträger auf verschiedenen Bearbeitungsmaschinen, die jeweils mit einem entsprechenden Spannfutter ausgestattet sind, zur sukzessiven Bearbeitung oder auf ebenfalls mit einem entsprechenden Spannfutter ausgestatteten Mess- und Prüfstationen eingespannt werden müssen.

Eine solche Einrichtung ist zum Beispiel in der EP-A1-0 255 042 beschrieben. Diese Einrichtung weist zwei über die Oberfläche des Spannfutters herausragende Zentrierleistenpaare auf, die mit Anlageflächen zur Ausrichtung des Werkstückträgers in X- und Y-Richtung versehen sind. Ferner sind vier über die Oberfläche des Spannfutters vorstehende Zapfen vorgesehen, die für die Ausrichtung des Werkstückträgers in Z-Richtung verantwortlich sind. Der zugeordnete Werkzeughalter weist eine plane Oberfläche auf, die gegen die Stirnfläche der vorerwähnten Zapfen aufzuliegen bestimmt ist. Ferner sind im Werkzeughalter zwei Paare von auf die Zentrierleisten ausgerichtete Nuten mit zur Anlage an die Leisten vorgesehenen elastischen Lippen vorhanden. Schliesslich ist der Werkzeughalter mit einer Mittelbohrung zur Aufnahme eines Zugbolzens versehen, mit Hilfe dessen die zur lagegerechten Zentrierung des Werkstückträgers erforderliche Spannkraft übertragen wird. Dabei weist das Spannfutter einen zentrisch angeordneten Kugelverschluss auf, der mit diesem Zugbolzen zusammenarbeitet.

Ein Nachteil solcher bekannter Einrichtungen ist darin zu sehen, dass sie relativ instabil sind, insbesondere wenn grössere bzw. schwerere Werkstücke zu bearbeiten sind. Somit können sie keine allzugrossen Kipp- und Drehmomente aufnehmen, die insbesondere bei der zerspanenden Bearbeitung auftreten können. Eine Vergrösserung der Einrichtung, die eine bessere Stabilität gewährleisten würde, ist in vielen Fällen aus Platzgründen unerwünscht.

Demzufolge ist es die Aufgabe der Erfindung, eine Einrichtung zum positionsdefinierten Aufspannen eines Werkstücks im Arbeitsbereich einer Bearbeitungsmaschine der im Oberbegriff des Patentanspruchs 1 genannten Art derart weiterzubilden, dass der am Spannfutter festgespannte Werkstückträger und damit das zu bearbeitende Werkstück bei gleich bleibender, hoher Positioniergenauigkeit, beispielsweise auch beim wiederholten Aus- und Einspannen, unter Beibehaltung der erwünschten kleinen Abmessungen grössere Kipp- und Drehmomente aufnehmen kann, ohne dass sich die gegenseitige Lage von Werkstückträger und Spannfutter verändert.

Gemäss der Erfindung wird diese Aufgabe bei einer Einrichtung der im Oberbegriff des Patentanspruchs 1 definierten Art durch die im Kennzeichen dieses Anspruchs angegebenen Massnahmen gelöst.

Um die angestrebte Widerstandsfähigkeit gegen eine ungewollte Lageveränderung des Werkstückträgers bei der Einwirkung von hohen Drehmomenten noch weiter zu verbessern, ist bei einem bevorzugten Ausführungsbeispiel der Einrichtung vorgesehen, dass die Zentrierzapfen randseitig auf der Oberfläche des Spannfutters angeordnet sind und dass sich bis an den Rand der Oberfläche des Spannfutters erstreckende, erhöhte Flächenbereiche als Z-Referenzen des Spannfutters vorgesehen sind, wobei jeweils zumindest die beiden sich peripher gegenüberliegenden Seitenflächen der Zentrierzapfen gegenüber der Z-Achse geneigt sind, ferner dass die Vertiefungen in einer gegen die Innenseite des im wesentlichen hohlzylindrischen Werkstückträgers ragenden Schulter eines Oberteils des Werkstückträgers eingearbeitet sind, wobei deren Lage mit derjenigen der Zentrierzapfen am Spannfutter korrespondiert, und dass schliesslich planbearbeitete Oberflächenbereiche dieser Schulter vorgesehen sind, welche letztere gegen die erhöhten Flächenbereiche an der Oberseite des Spannfutters aufzuliegen bestimmt sind.

Um auch die Aufnahme z.B. langgestreckter Werkstücke durch die erfindungsgemässe Einrichtung zu ermöglichen, bei denen nur ein bestimmter Bereich zu bearbeiten ist, ist bei einer Weiterbildung des Erfindungsgegenstandes vorgesehen, dass sowohl das Spannfutter als auch der Werkstückträger zentrale Öffnungen zur Aufnahme derartiger langgestreckter Werkstücke besitzen.

Im übrigen sind bevorzugte Ausführungsformen und Weiterbildungen des Erfindungsgegenstandes in den abhängigen Ansprüchen 2-14 umschrieben.

Im folgenden wird ein Ausführungsbeispiel der erfindungsgemässen Einrichtung unter Bezugnahme auf die beiliegenden Zeichnungen näher erläutert. In den Zeichnungen zeigen:
- Fig. 1: eine perspektivische Ansicht des Spannfutters;
- Fig. 2: eine Ansicht des Spannfutters gemäss Fig. 1 von oben;
- Fig. 3: eine perspektivische Ansicht des Werkstückträgers;
- Fig. 4: eine Ansicht des Werkstückträgers gemäss Fig. 3 von unten;
- Fig. 5: einen Schnitt durch den Werkstückträger entlang der Linie V-V in Fig. 4;
- Fig. 6: einen schematisch dargestellten Teilschnitt durch eine Zentrieröffnung und einen Zentrierzapfen in grösserem Massstab.
- Fig. 7: einen Schnitt durch das Spannfutter entlang der Linie VII-VII in Fig. 2;
- Fig. 8: einen Schnitt durch das Spannfutter entlang der Linie VIII-VIII in Fig. 2; und
- Fig. 9: einen Schnitt durch das Spannfutter entlang der Linie IX-IX in Fig. 2;

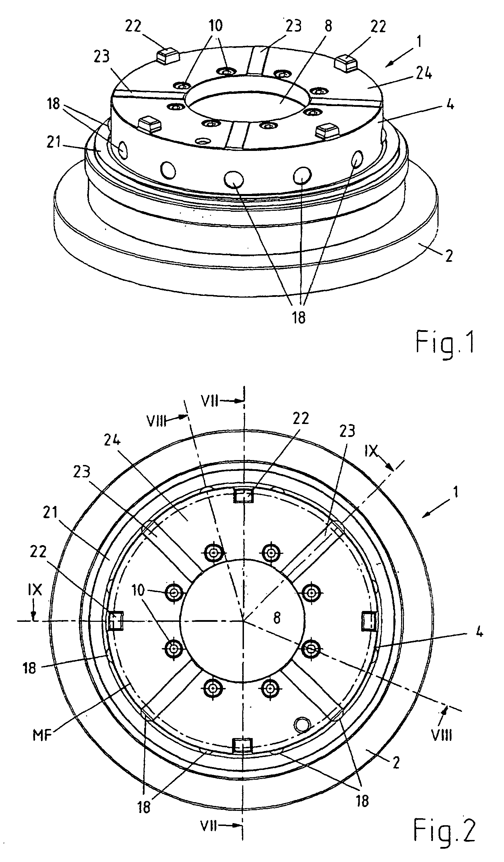

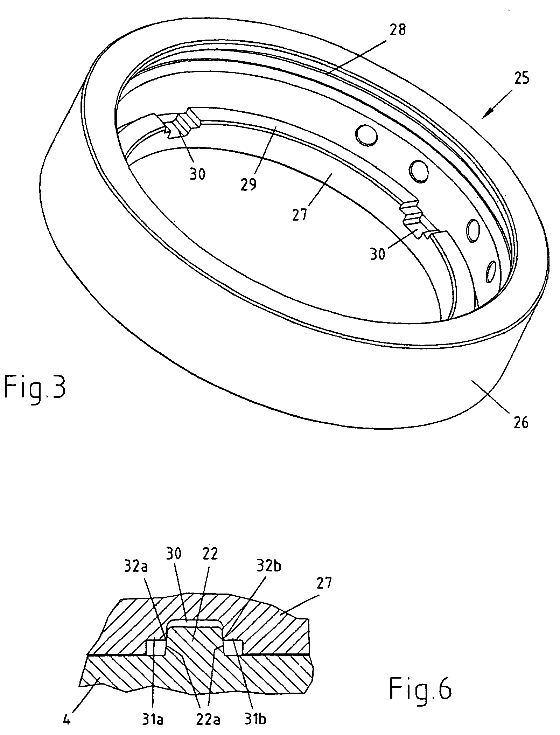

Die in den Zeichnungen dargestellte Einrichtung zum positionsdefinierten Aufspannen eines Werkstücks am Arbeitsplatz einer Bearbeitungsmaschine umfasst zum einen ein generell mit 1 bezeichnetes Spannfutter (Fig. 1, 2 und 7-9) und zum anderen einen generell mit 25 bezeichneten Werkstückträger (Fig. 3-5). Während das Spannfutter 1 im wesentlichen dazu bestimmt ist, im Arbeitsbereich einer Bearbeitungseinrichtung fixiert zu werden, dient der Werkstückträger 25 zur Aufnahme eines zu bearbeitenden Werkstückes. Es versteht sich dabei, dass der Begriff "Werkstück" im allgemeinsten Sinn zu verstehen ist; namentlich kann es sich auch um ein zu bearbeitendes Werkzeug handeln, zum Beispiel eine Elektrode für eine Senkerodiermaschine.

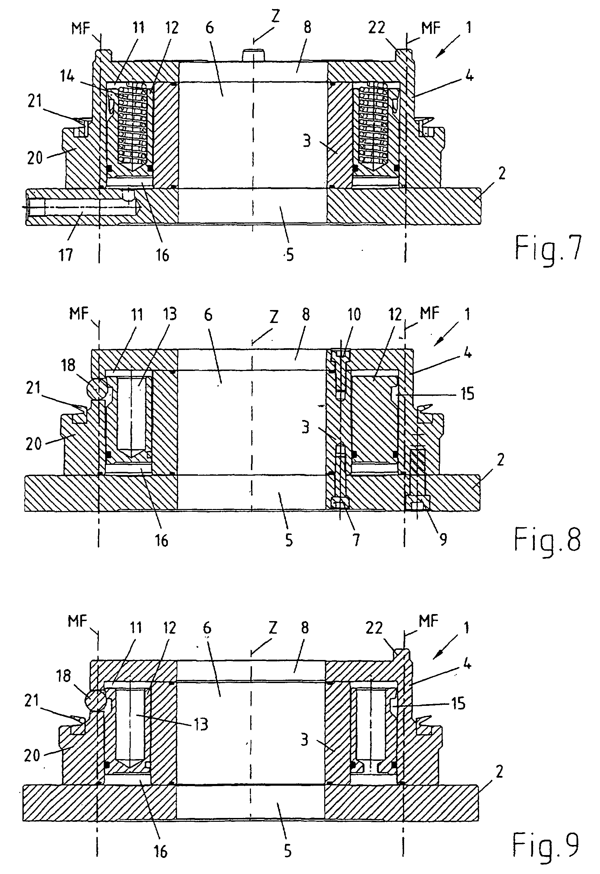

Wie insbesondere aus den Schnittdarstellungen gemäss Fig. 7-9 zu erkennen ist, ist das Spannfutter im wesentlichen dreiteilig ausgebildet, mit einem Basiselement 2, einem Mittelteil 3 und einem Kopfteil 4. Das Basiselement hat im dargestellten Ausführungsbeispiel die Form einer kreisrunden Scheibe mit einer zentralen Öffnung 5, auf deren Bedeutung noch eingegangen wird. Das Mittelteil 3, das mit einer zentralen Öffnung 6 derselben lichten Weite ausgestattet ist und im wesentlichen zylindrische bzw. rohrförmige Gestalt besitzt, ist mittels Schrauben 7 mit dem Basiselement 2 verbunden. Das Kopfteil 4 schliesslich, ebenfalls mit einer zentralen Öffnung 8 derselben lichten Weite ausgestattet, hat im wesentlichen topf- bzw. hutförmige Gestalt und besitzt einen Innendurchmesser, der grösser ist als der Aussendurchmesser des Mittelteils 3. Das Kopfteil 4 ist einerseits mittels Schrauben 9 mit dem Basisteil 2 und andererseits mittels Schrauben 10 mit dem Mittelteil 3 verbunden. Schliesslich ist der Kopfteil 4 mit einer sich unterhalb der Bohrungen 19 befindlichen, umlaufenden Schulter 20 ausgestattet, in deren Oberfläche eine Dichtung 21 eingelassen ist.

Durch die vorstehend erläuterte Ausbildung entsteht ein äusserst starres und biegesteifes Spannfuttergehäuse, das zudem leicht zu Unterhaltszwecken zerlegt werden kann.

Die obere Fläche 24 des Kopfteils 4 ist zum einen mit vier vorstehenden Zentrierzapfen 22 versehen, die im wesentlichen prismatische Gestalt besitzen und die über Kreuz im Randbereich der oberen Fläche 24 des Kopfteils angeordnet sind. Zwei einander gegenüberliegende Zentrierzapfen 22 legen dabei den Verlauf der X-Achse fest, während die verbleibenden zwei einander gegenüberliegenden Zentrierzapfen den Verlauf der senkrecht dazu liegenden Y-Achse definieren. X- und Y-Achse schneiden sich in der senkrecht zu beiden verlaufenden Z-Achse (Fig. 7-9). Jeweils zumindest die beiden sich peripher gegenüberliegenden Seitenflächen der Zentrierzapfen 22 sind dabei gegenüber der Z-Achse etwas geneigt, wie dies nachfolgend noch erläutert werden wird.

Zum anderen ist die obere Fläche 24 des Kopfteils 4 mit vier Flächenabschnitten 23 versehen, die sich im vorliegenden Beispiel radial zwischen jeweils zwei Zentrierzapfen 22 erstrecken und die gegenüber der Oberfläche 24 des Kopfteils 4 etwas erhöht sind. Diese Flächenabschnitte 23 dienen als Z-Referenz, wie nachstehend noch erläutert werden wird.

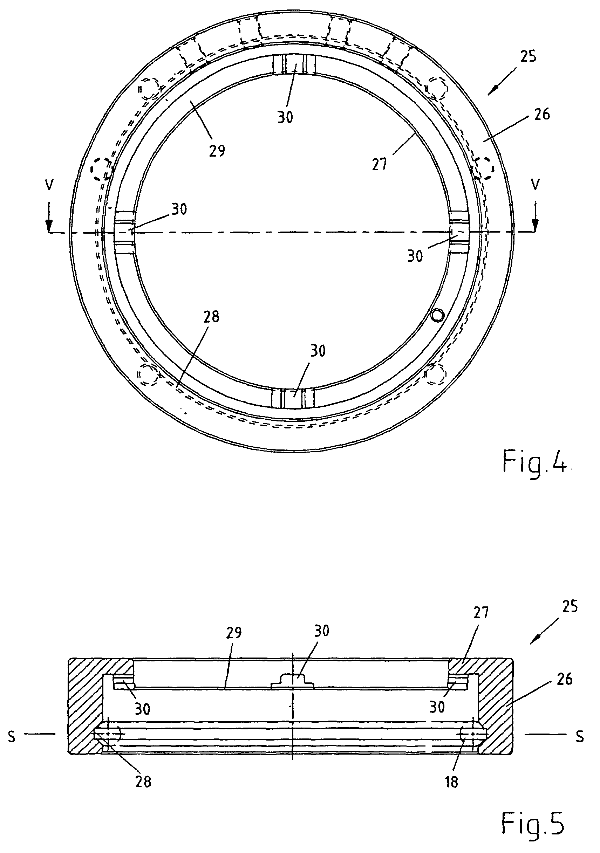

Die Ausbildung des Werkstückträgers 25 ist aus den Fig. 3-5 ersichtlich. Wie namentlich aus den Fig. 3 und 5 zu entnehmen ist, umfasst der einstückig ausgebildete Werkstückträger 25 einen peripheren Teil 26 mit im wesentlichen zylindrischer bzw. rohrförmiger Gestalt sowie einen im wesentlichen kreisringförmigen Oberteil 27. Der Innendurchmesser des peripheren Teils 26 entspricht dabei in etwa dem Aussendurchmesser des Kopfteils 4 des Spannfutters 1, selbstredend mit vernünftigem Spiel, so dass der Werkstückträger 25 auf das Spannfutter aufgesetzt werden kann.

Der periphere Teil 26 des Werkstückträgers 25 ist mit einer an seiner Innenfläche umlaufenden Ringnut 28 versehen, deren beiden Seitenwände sich konisch gegen innen hin öffnend geneigt verlaufen. Mit anderen Worten, diese Ringnut hat einen im wesentlichen V-förmigen Querschnitt. Auf diese Ringnut wird im folgenden noch näher eingegangen werden.

Der Oberteil 27 des Werkstückträgers 25 ist mit einer gegen das Innere des peripheren Teils 26 vorstehenden, kreisringförmigen Schulter 29 versehen. Der mittlere Durchmesser dieser Schulter 29 entspricht dabei im wesentlichen dem Durchmesser des Kreises, auf dem die vier Zentrierzapfen 22 des Kopfteils 4 angeordnet sind. Die gegen das Innere des peripheren Teils 26 des Werkstückträgers 25 vorstehende Stirnfläche der Schulter 29 ist plan geschliffen und dient als Z-Referenz, die mit den vorstehend erwähnten Flächenabschnitten 23 der Oberfläche 24 des Kopfteils 4 zusammenzuarbeiten bestimmt ist. Ferner sind in die genannte Stirnfläche der Schulter 29 vier über Kreuz angeordnete Vertiefungen 30 eingearbeitet, auf deren Ausbildung nachstehend noch eingegangen wird und die mit den vier über die Oberfläche 24 des Kopfteils 4 des Spannfutters 1 vorstehenden Zentrierzapfen 22 zusammenzuarbeiten bestimmt sind.

Auch wenn beim vorstehend beschriebenen Ausführungsbeispiel vier Zentrierzapfen 22 und vier mit diesen zusammenarbeitende Vertiefungen 30 vorgesehen sind, versteht es sich, dass es möglich ist jeweils drei, sechs, acht oder eine grössere, eine Untermenge einer Hirth-Verzahnung bildende Anzahl von Zapfen 22 und Vertiefungen 30 vorzusehen, um die Positionierung des Werkzeugträgers 25 gegenüber dem Spannfutter 1 in X-, Y- und Winkelrichtung zu gewährleisten.

In Fig. 6 ist ein vergrösserter, schematischer Detailschnitt durch eine Vertiefung 30 und einen Zentrierzapfen 22 dargestellt. Die Vertiefung 30 ist als zweistufige Nut ausgebildet und besitzt zwei Absätze 31a, 31b. Wie bereits erwähnt, sind die Zentrierzapfen 22 leicht konisch ausgebildet, indem jeweils zumindest die beiden sich peripher gegenüberliegenden Seitenflächen 22a der Zentrierzapfen 22 gegenüber der Z-Achse etwas geneigt sind, in der Praxis um einige Grad, vorzugsweise etwa zwischen 3° und 9°. Die gegen das Innere der Nut 30 vorstehenden Kanten 32a, 32b der Absätze 31a, 31b sind für die Positionierung massgebend, indem deren gegenseitiger Abstand etwas geringer ist als die Breite des Zentrierzapfens 22 zwischen denjenigen Stellen gemessen, die bei in das Spannfutter 1 eingespanntem Werkstückträger 25 die Kanten 32a, 32b berühren.

Die gegenseitigen Dimensionen von Spannfutter 1 und Werkzeugträger 25 sind so gewählt, dass sich daraus folgende Konsequenz ergibt: Wenn der Werkstückträger 25 lose auf das Spannfutter 1 aufgesetzt wird, greifen die Zentrierzapfen 22 in die Vertiefungen 30 ein, wobei die Seitenflächen 22a der Zentrierzapfen 22 in Linienberührung mit den Kanten 32a, 32b der Absätze 31a, 31b gelangen. In diesem Zustand liegt die plangeschliffene Stirnfläche der Schulter 29 des Werkstückträgers 25 noch nicht auf den gegenüber der Oberfläche 24 des Kopfteils 4 etwas erhöhten und als Z-Referenz dienenden Flächenabschnitten 23 des Spannfutters 1 auf. Vielmehr ist in diesem Zustand ein Spalt zwischen Stirnfläche der Schulter 29 und Oberfläche der Abschnitte 23 von einigen hundertstel mm vorhanden. Andererseits ist aber die Positionierung des Werkstückträgers 25 gegenüber dem Spannfutter 1 in X- und Y-Richtung sowie bezüglich der Winkellage festgelegt und abgeschlossen.

Nachdem nun der Werkstückträger 25 auf das Spannfutter 1 aufgesetzt und in X/Y-Richtung sowie bezüglich der Winkellage positioniert ist, wird die im folgenden noch näher beschriebene Spannvorrichtung betätigt, so dass der Werkstückträger 26 gegen das Spannfutter 1 gezogen wird, in der Praxis mit einer Kraft von ca. 2000 - 3000 N. Unter Wirkung dieser Spannkraft werden die Absätze 31a, 31b im Bereich ihrer Kanten 32a, 32b elastisch verformt, und zwar in einem solchen Mass, bis die Oberfläche der Schulter 29 des Werkstückträgers 25 auf den etwas erhöhten Flächenabschnitten 23 des Spannfutters 1 aufliegt. Damit ist der Werkstückträger 25 auch in Z-Richtung gegenüber dem Spannfutter 1 positioniert.

Die zum gegenseitigen, axialen Verspannen von Werkstückträger 25 und Spannfutter 1 erforderliche Spannkraft wird beim vorliegenden Ausführungsbeispiel wie folgt erzeugt:
Durch die vorerwähnte Differenz der Durchmesser von Mittelteil 3 und Kopfteil 4 des Spannfutters 1 ist zwischen diesen beiden Elementen ein Ringraum 11 gebildet, der mittels nicht näher bezeichneten, in den Zeichnungen (Fig. 7-9) angedeuteten Dichtelementen abgedichtet ist. Im Inneren des Ringraumes 11 ist ein Ringkolben 12 derart aufgenommen, dass er in Richtung der Achse Z des Spannfutters 1 verschiebbar ist. Der Ringkolben 12 ist mit einer Mehrzahl von Sackbohrungen 13 versehen, die gleichmässig entlang seines Umfangs verteilt angeordnet und die zur Aufnahme von Spannfedern 14 bestimmt sind. Die Spannfedern 14 stützen sich an der unteren Fläche des Kopfteils 4 ab und haben das Bestreben, den Ringkolben 12 gegen unten zu pressen. Ferner ist der Ringkolben mit einer äusseren, peripheren Nut 15 versehen, deren untere Seitenwand gegen aussen hin abfallend abgeschrägt ist; diese Nut 15 dient zur teilweisen Aufnahme einer Mehrzahl von Spannkugeln 18.

Unterhalb des Ringkolbens 12 verbleibt ein freier Ringraum 16, der mit einer Anschlussbohrung 17, die in der Grundplatte eingelassen ist, kommuniziert. Durch diese Anschlussbohrung 17 kann der Ringraum 16 mit Druckluft gefüllt werden, die den Ringkolben 12 beaufschlagt und diesen entgegen der Wirkung der Federn 14 gegen oben bewegt.

Der Kopfteil 4 ist mit einer Mehrzahl von radialen Bohrungen 19 versehen, deren Durchmesser im wesentlichen dem Durchmesser der Spannkugeln 18 entspricht und die zur Aufnahme jener Spannkugeln 18 bestimmt sind. Die Höhenlage der Bohrungen 19 und die Höhenlage der umlaufenden Nut 15 sind dabei derart aufeinander abgestimmt, dass die in die Bohrungen 19 eingesetzten Spannkugeln 18 in die umlaufende Nut 15 eintauchen können, wenn der mit Pressluft beaufschlagte Ringkolben 12 entgegen der Wirkung der Federn 14 in seine obere Totpunktlage verschoben ist, und zwar soweit, dass die Spannkugeln 18 nicht mehr über die äussere Peripherie des Kopfteils 4 hervorstehen.

Die axiale Lage der Ringnut 28, d.h. die Höhenlage bezüglich der Z-Achse, ist derart festgelegt, dass, wie in Fig. 5 schematisch angedeutet, Spannkugeln 18 in die Nut 28 eintauchen können, wenn der Werkstückträger 25 lose auf das Spannfutter 1 aufgesetzt ist, und zwar derart, dass die Kugeln 18 etwas gegenüber der axial verlaufenden Symmetriebene S-S der Ringnut 28 gegen unten versetzt sind. Anders herum ausgedrückt: Bei lose auf das Spannfutter 1 aufgesetztem Werkstückträger 25 befindet sich die Symmetriebene S-S etwas oberhalb des Zentrums der in die Bohrungen 19 des Mittelteils 3 eingesetzten Kugeln 18.

Die axiale Lage der Ringnut 28 im Werkzeugträger 25 ist derart festgelegt, dass die Spannkugeln 18 des Spannfutters 1 in die Nut 28 eintauchen können, wenn der Werkstückträger 25 lose auf das Spannfutter 1 aufgesetzt ist, wobei sich die Symmetriebene S-S der Ringnut 28 etwas oberhalb des Zentrums der in die Bohrungen 19 des Mittelteils 3 eingesetzten Spannkugeln 18 befindet. Andererseits, um überhaupt ein loses Aufsetzen des Werkstückträgers 26 auf das Spannfutter 1 zu ermöglichen, müssen sich die Spannkugeln 18 des Spannfutters 1 in ihrer zurückgezogenen Lage befinden. Dies geschieht dadurch (cf. Fig. 7-9), dass der Ringraum 16 unterhalb des Ringkolbens 12 mit Druckluft beaufschlagt wird, so dass sich der Ringkolben 12 entgegen der Kraft der Federn 14 gegen oben bewegt. Dadurch gelangt die im Ringkolben 12 vorgesehene Ringnut 15 in eine auf die Kugeln 18 ausgerichtete Lage, so dass diese in die Nut 15 eintauchen können und nicht über die Oberfläche des Mittelteils 3 des Spannfutters 1 vorstehen.

Nachdem nun der Werkstückträger 25 auf das Spannfutter 1 aufgesetzt und in X/Y-Richtung sowie bezüglich der Winkellage positioniert ist, wird der Überdruck im Ringraum 16 abgebaut, so dass sich der Ringkolben 12 unter Wirkung der Federn 14 gegen unten bewegt. Damit werden die Spannkugeln 18 in die Ringnut 28 des Werkstückträgers 25 hineingepresst. Durch die zuvor erwähnte, etwas asymmetrische Ruhelage zwischen Kugeln 18 und Ringnut 25 und durch die im Querschnitt V-förmige Ausbildung der letzteren wird der Werkstückträger 26 gegen das Spannfutter 1 gezogen, so dass, wie zuvor erwähnt, die Oberfläche der Schulter 29 des Werkstückträgers 25:.auf den etwas erhöhten Flächenabschnitten 23 des Spannfutters 1 aufliegt. Damit ist der Werkstückträger 25 auch in Z-Richtung gegenüber dem Spannfutter 1 positioniert und der Spannvorgang abgeschlossen.

Aus den vorstehenden Erklärungen ergibt sich, dass die parallel zur Z-Richtung wirkende Spannkraft durch die Spannkugeln 18 auf den Werkstückträger 25 spannwirksam übertragen wird, und zwar, im vorliegenden Beispiel, an zwölf über den Umfang des Mittelteils 3 des Spannfutters 1 verteilten Stellen. Mit anderen Worten, die gesamte auf den Werkstückträger 25 ausgeübte Spannkraft summiert sich aus zwölf einzelnen Teil-Spannkraftkomponenten, die je durch eine der Kugeln 18 übertragen werden. Dabei liegen die Wirkungslinien dieser Teil-Spannkraftkomponenten auf einer Zylindermantelfläche MF (Fig. 2, 5 und 7-9), die, je nach gewählter Dimensionierung von Spannfutter 1 und Werkstückträger 25 sowie abhängig von der exakten Lage der Zentrierzapfen 22, der Vertiefungen 30 und der Oberfläche der Schulter 29, durch diese Elemente 22, 30, 29 hindurch verläuft, also diese schneidet, oder unmittelbar neben diesen Elementen, vorzugsweise etwas ausserhalb, verläuft. Damit ist sichergestellt, dass die Spannkraft dort angreift, wo sie eigentlich benötigt wird, was zusätzlich dazu beiträgt, dass sonst auftretende Biegebeanspruchungen des Werkstückträgers drastisch reduziert bzw. völlig vermieden werden. Zudem werden während der Bearbeitung der Werkstücke auftretende Kippmomente wesentlich besser aufgenommen, als dies mit einer herkömmlichen, zentralen Spannung der Fall ist.

Es versteht sich, dass der Ringkolben 12 anstatt mittels Druckluft auch hydraulisch betätigt werden kann.

Die endgültige Formgebung der Vertiefungen 30 im Werkstückträger 25 erfolgt vorzugsweise durch plastische Verformung, z.B. durch Prägen. Damit kann eine sehr hohe Genauigkeit, auch in der Serienfertigung erreicht werden. Die massiven Zentrierzapfen 22 mit geringfügig geneigten Flanken sorgen dafür, in Verbindung mit den Vertiefungen 30, in die sie eingreifen, dass auch sehr hohe Drehmomente übertragen werden können.

Zur Stabilität und Starrheit des Systems Spannfutter-Werkstückträger in gespanntem Zustand trägt auch der Umstand bei, dass der Werkstückträger, eingeschlossen dessen Zentrierelemente in X-, Y-, Z- und Winkelrichtung, einstückig ausgebildet sind. Durch die wesentlichen topf- bzw. hutförmige Gestalt des Werkstückträgers 25 sind die wesentlichen Teile des Spannfutters 1 im Betrieb umschlossen, wobei insbesondere die Zentrierelemente 22, 23, 30 gut gegen Verschmutzung geschützt sind. Dieser Schutz wird noch durch die Dichtung 21 (cf. Fig. 7-9) an der Oberseite der Schulter 20 verbessert, gegen welche die untere Stirnkante des peripheren Teils 26 des Werkstückträgers 25 aufliegt.

Die eingangs erwähnten zentralen Öffnungen 5, 6 und 8 in der Grundplatte, dem Mittelteil 3 und dem Kopfteil 4 des Spannfutters eröffnen, in Verbindung mit der generell ringförmigen Ausbildung des Werkstückträgers 25, die Möglichkeit, auch langgestreckte Werkstücke aufzuspannen und zu bearbeiten. Beispielsweise können die Turbinenblätter von Turbinenschaufeln in den vorerwähnten Öffnungen aufgenommen werden, um den sogenannten "Tannenbaum" der Turbinenschaufeln zu bearbeiten.

Falls auf die zentrale Offenheit des Spannsystems verzichtet werden kann, bietet sich die Möglichkeit an, ein zusätzliche, zentral angeordnete Spannvorrichtung vorzusehen, um die auf den Werkzeugträger 25 ausgeübte Spannkraft noch weiter zu erhöhen, oder aber zentral ein zweites, unabhängiges Spannsystem bekannter Art anzuordnen, das dann für das Aufspannen kleinerer Werkstücke geeignet wäre.

## Patentansprüche

1. Einrichtung zum positionsdefinierten Aufspannen eines Werkstücks im Arbeitsbereich einer Bearbeitungsmaschine, mit einem im Arbeitsbereich der Bearbeitungsmaschine zu fixierenden Spannfutter (1) und einem auf das Spannfutter (1) aufsetzbaren und daran festzuspannenden Werkstückträger (25), ferner mit ersten Positioniermitteln (22, 23) am Spannfutter (1) und zweiten Positioniermitteln (29, 30) am Werkstückträger (25), welche als Richtelemente paarweise zusammenarbeiten und den Werkstückträger (25) in drei senkrecht zueinander verlaufenden Koordinatenachsen (X, Y, Z) sowie winkelgerecht gegenüber dem Spannfutter (1) positionieren, und mit einer Spannvorrichtung (12, 14, 18, 28), deren Spannkraft den Werkstückträger in der durch die Positioniermittel festgelegten Position am Spannfutter festhält, **dadurch gekennzeichnet, dass** die ersten Positioniermittel konische Zentrierzapfen (22) und die zweiten Positioniermittel Vertiefungen in Form einer zweistufigen Nut (30) aufweisen, welche zwei Absätze (31a, 31b) besitzt, deren gegen das Innere der Nut (30) vorstehenden Kanten (32a, 32b) einen gegenseitigen Abstand besitzen, der etwas geringer ist als die Breite eines Zentrierzapfens (22) zwischen denjenigen Stellen gemessen, die bei in das Spannfutter (1) eingespanntem Werkstückträger (25) die Kanten (32a, 32b) berühren.

2. Einrichtung nach Anspruch 1, **dadurch gekennzeichnet, dass** die Zentrierzapfen (22) randseitig auf der Oberfläche des Spannfutters (1) angeordnet sind, wobei jeweils zumindest die beiden sich peripher gegenüberliegenden Seitenflächen (22a) der Zentrierzapfen (22) gegenüber der Z-Achse geneigt sind.

3. Einrichtung nach Anspruch 2, **dadurch gekennzeichnet, dass** die Neigung der Seitenflächen (22a) etwa zwischen 3° und 9° beträgt.

4. Einrichtung nach Anspruch 1, **dadurch gekennzeichnet, dass** die ersten Positioniermittel ferner sich bis an den Rand der Oberfläche des Spannfutters (1) erstreckende, erhöhte Flächenbereiche (23) umfassen.

5. Einrichtung nach einem der vorangehenden Ansprüche, **dadurch gekennzeichnet, dass** die Vertiefungen (30) in einer gegen die Innenseite des im wesentlichen hohlzylindrischen Werkstückträgers (25) ragenden Schulter (29) eines Oberteils (27) des Werkstückträgers (25) eingearbeitet sind, wobei deren Lage mit derjenigen der Zentrierzapfen (22) am Spannfutter (1) korrespondiert.

6. Einrichtung nach Anspruch 1 und 5, **dadurch gekennzeichnet, dass** die zweiten Positioniermittel ferner planbearbeitete Oberflächenbereiche dieser Schulter (29) umfassen, welche letztere gegen die erhöhten Flächenbereiche (23) an der Oberseite des Spannfutters (1) aufzuliegen bestimmt sind.

7. Einrichtung nach einem der vorangehenden Ansprüche, **dadurch gekennzeichnet, dass** das Spannfutter (1) im wesentlichen zylindrisch und der Werkstückträger (25) im wesentlichen die Form eines einseitig mit einem Kreisring verschlossenen Hohlzylinders aufweist, derart, dass das Spannfutter (1) in gespanntem Zustand der Einrichtung vom Werkstückträger (25) umschlossen ist.

8. Einrichtung nach einem der vorangehenden Ansprüche, **dadurch gekennzeichnet, dass** sowohl das Spannfutter (1) als auch der Werkstückträger (25) zentrale Öffnungen (5, 6, 8) zur Aufnahme von langgestreckten Werkstücken besitzen.

9. Einrichtung nach einem der vorangehenden Ansprüche, **dadurch gekennzeichnet, dass** die Spannvorrichtung (12, 14, 18, 28) randseitig wirkende Spannorgane (18, 28) mit einer Mehrzahl von um den Umfang des Spannfutters (1) verteilt angeordneten Spannkugeln (18) aufweist, die mit einer in der Innenfläche des Werkzeugträgers (25) angeordneten, umlaufenden Ringnut (28) zusammenzuarbeiten bestimmt sind.

10. Einrichtung nach Anspruch 9, **dadurch gekennzeichnet, dass** die Spannvorrichtung ferner einen federbelasteten Ringkolben (12) umfasst, der axial beweglich in einem Ringraum (11) des Spannfutters (1) angeordnet ist, gegen den die Spannkugeln (18) anliegen und der die Spannkugeln (18) radial in die umlaufende Ringnut (28) des Werkstückträgers (25) zu pressen bestimmt ist.

11. Einrichtung nach Anspruch 9, **dadurch gekennzeichnet, dass** die Spannkugeln (18) in gleichmässig über den Umfang des Spannfutters (1) verteilt angeordneten, radialen Bohrungen (19) aufgenommen sind.

12. Einrichtung nach einem der Ansprüche 9-11, **dadurch gekennzeichnet, dass** zwölf Spannkugeln (18) vorgesehen sind.

13. Einrichtung nach Anspruch 9, **dadurch gekennzeichnet, dass** die umlaufende Ringnut (28) des Werkstückträgers (25) im wesentlichen V-förmigen Querschnitt besitzt.

14. Einrichtung nach einem der Ansprüche 9-13, **dadurch gekennzeichnet, dass** die axiale Lage der umlaufenden Ringnut (28) im Werkzeugträger (25) derart festgelegt ist, dass die Spannkugeln (18) des Spannfutters (1) in die Ringnut (28) eintauchen können, wenn der Werkstückträger (25) lose auf das Spannfutter (1) aufgesetzt ist, wobei sich die Symmetriebene (S-S) der Ringnut (28) etwas oberhalb des Zentrums der in die Bohrungen (19) des Spannfutters (1) eingesetzten Spannkugeln (18) befindet.

## Claims

1. Device for mounting a workpiece in a defined position in the working region of a machine tool, having a chuck (1) to be fixed in the working region of the machine tool and a work carrier (25) which can be put onto the chuck (1) and is to be firmly clamped thereon, furthermore having first positioning means (22, 23) on the chuck (1) and second positioning means (29, 30) on the work carrier (25), which interact in pairs as locating elements and position the work carrier (25) in three coordinate axes (X, Y, Z), running perpendicularly to one another, and at the correct angle relative to the chuck (1), and having a chucking arrangement (12, 14, 18, 28), the chucking force of which holds the work carrier in place on the chuck in the position established by the positioning means, **characterized in that** the first positioning means have conical centring pins (22) and the second positioning means have recesses in the form of a two-step groove (30) which has two steps (31a, 31b) whose edges (32a, 32b) projecting towards the interior of the groove (30) are at a distance apart which is slightly smaller than the width of a centring pin (22) measured between those points which touch the edges (32a, 32b) when the work carrier (25) is chucked in place in the chuck (1).

2. Device according to Claim 1, **characterized in that** the centring pins (22) are arranged at the margin of the surface of the chuck (1), at least the two peripherally opposite side faces (22a) of the centring pins (22) in each case being inclined relative to the Z axis.

3. Device according to Claim 2, **characterized in that** the inclination of the side faces (22a) is approximately between 3° and 9°.

4. Device according to Claim 1, **characterized in that**, furthermore, the first positioning means comprise raised surface regions (23) extending up to the margin of the surface of the chuck (1).

5. Device according to one of the preceding claims, **characterized in that** the recesses (30) are made in a shoulder (29) of a top part (27) of the work carrier (25), this shoulder (29) projecting towards the inside of the essentially hollow-cylindrical work carrier (25) and its position corresponding to that of the centring pins (22) on the chuck (1).

6. Device according to Claims 1 and 5, **characterized in that**, furthermore, the second positioning means comprise faced surface regions of this shoulder (29), these surface regions being intended to rest in position against the raised surface regions (23) on the top side of the chuck (1).

7. Device according to one of the preceding claims, **characterized in that** the chuck (1) is essentially cylindrical and the work carrier (25) essentially has the shape of a hollow cylinder, closed on one side with a circular ring, in such a way that the chuck (1) is enclosed by the work carrier (25) in the chucked state of the device.

8. Device according to one of the preceding claims, **characterized in that** both the chuck (1) and the work carrier (25) have central openings (5, 6, 8) for accommodating elongated workpieces.

9. Device according to one of the preceding claims, **characterized in that** the chucking arrangement (12, 14, 18, 28) has chucking members (18, 28) acting at the margin and having a multiplicity of chucking balls (18) which are arranged in a distributed manner around the circumference of the chuck (1) and are intended for interacting with an encircling annular groove (28) arranged in the inner surface of the work carrier (25).

10. Device according to Claim 9, **characterized in that**, furthermore, the chucking arrangement comprises a spring-loaded annular piston (12) which is arranged so as to be axially movable in an annular space (11) of the chuck (1), and against which the chucking balls (18) bear and which is intended for pressing the chucking balls (18) radially into the encircling annular groove (28) of the work carrier (25).

11. Device according to Claim 9, **characterized in that** the chucking balls (18) are accommodated in radial bores (19) arranged in a uniformly distributed manner over the circumference of the chuck (1).

12. Device according to one of Claims 9 to 11, **characterized in that** twelve chucking balls (18) are provided.

13. Device according to Claim 9, **characterized in that** the encircling annular groove (28) of the work carrier (25) has an essentially V-shaped cross section.

14. Device according to one of Claims 9 to 13, **characterized in that** the axial position of the encircling annular groove (28) in the work carrier (25) is established in such a way that the chucking balls (18) of the chuck (1) can plunge into the annular groove (28) when the work carrier (25) is put loosely onto the chuck (1), the plane of symmetry (S-S) of the annular groove (28) being located slightly above the centre of the chucking balls (18) inserted into the bores (19) of the chuck (1).

## Revendications

1. Dispositif permettant l'ablocage, défini en position, d'une pièce dans la zone de travail d'une machine d'usinage, comprenant un plateau de serrage (1), devant être fixé dans la zone de travail de la machine d'usinage, et un porte-pièce (25) pouvant être posé sur le plateau de serrage (1) et devant être serré sur celui-ci, et en outre des premiers moyens de positionnement (22, 23) situés sur le plateau de serrage (1) et des seconds moyens de positionnement (29, 30) situés sur le porte-pièce (25), qui coopèrent par paires en tant qu'éléments d'alignement et positionnent le porte-pièce (25) vis-à-vis du plateau de serrage (1) suivant trois axes de coordonnées (X, Y, Z) s'étendant perpendiculairement entre elles d'une manière voulue volontairement sur le plan angulaire, et un dispositif de serrage (12, 14,18, 28) dont la force de serrage maintient le porte-pièce sur le plateau de serrage dans la position déterminée par les moyens de positionnement, **caractérisé en ce que** les premiers moyens de positionnement comprennent des plots de centrage (22) coniques et les seconds moyens de positionnement des évidements se présentant sous forme d'une entaille (30) à deux niveaux qui comporte deux épaulement (31a, 31 b) dont des arêtes (32a, 32b) dressées vers l'intérieur de l'entaille (30) présentent un espacement mutuel qui est légèrement plus faible que la largeur d'un plot de centrage (22) mesurée entre les emplacements de celui-ci qui sont au contact des arêtes (32a, 32b) lorsqu'un porte-pièce (25) est serré dans le plateau de serrage (1).

2. Dispositif suivant la revendication 1, **caractérisé en ce que** les plots de centrage (22) sont disposés du côté du bord sur la surface du plateau de serrage (1), au moins les deux surfaces latérales (22a) des plots de centrage (22) qui sont opposées suivant la périphérie étant chaque fois inclinées vis-à-vis de l'axe des Z.

3. Dispositif suivant la revendication 2, **caractérisé en ce que** l'inclinaison des surfaces latérales (22a) est approximativement comprise entre 3° et 9°.

4. Dispositif suivant la revendication 1, **caractérisé en ce que** les premiers moyens de positionnement comportent en outre des zones de surface (23) surélevées qui s'étendent jusqu'au bord de la surface du plateau de serrage (1).

5. Dispositif suivant l'une des revendications précédentes, **caractérisé en ce que** les évidements (30) sont ménagés dans un épaulement (29) d'une partie supérieure (27) du porte-pièce (25) qui fait saillie vers la face intérieure du porte-pièce (25) essentiellement de forme cylindrique creuse, leurs positions correspondant à celles des plots de centrage (22) situés sur le plateau de serrage (1).

6. Dispositif suivant les revendications 1 et 5, **caractérisé en ce que** les seconds moyens de positionnement comportent en outre des zones de surface usinées planes de cet épaulement (29), ces dernières étant destinées à reposer contre les zones de surface (23) en surélévation situées sur la face supérieure du plateau de serrage (1 ).

7. Dispositif suivant l'une des revendications précédentes, **caractérisé en ce que** le plateau de serrage (1) est essentiellement cylindrique et le porte-pièce (25) présente essentiellement la forme d'un cylindre creux fermé d'un côté par un anneau circulaire, d'une manière telle que, dans l'état serré du dispositif, le plateau de serrage (1 ) est entouré par le porte-pièce (25).

8. Dispositif suivant l'une des revendications précédentes, **caractérisé en ce que** le plateau de serrage (1) et le porte-pièce (25) présentent l'un et l'autre des ouvertures centrales (5, 6, 8) servant à recevoir des pièces allongées.

9. Dispositif suivant l'une des revendications précédentes, **caractérisé en ce que** le dispositif de serrage (12, 14, 18, 28) comprend des organes de serrage (18, 28) qui exercent leur action du côté du bord et comportent de multiples billes de serrage (18) réparties à la périphérie du plateau de serrage (1) et destinées à coopérer avec une gorge annulaire (28) ménagée dans la surface intérieure du porte-pièce (25) et faisant tout le tour.

10. Dispositif suivant la revendication 9, **caractérisé en ce que** le dispositif de serrage comprend en outre un piston annulaire (12) qui est soumis à la sollicitation d'un ressort, qui est disposé de façon à être mobile axialement dans un espace annulaire (11) du plateau de serrage (1), contre lequel les billes de serrage.(18) sont en appui et qui est destiné à appliquer sous pression les billes de serrage (18) radialement dans la gorge annulaire (28) du porte-pièce (25) qui fait tout le tour.

11. Dispositif suivant la revendication 9, **caractérisé en ce que** les billes de serrage (18) sont logées dans des perçages radiaux (19) disposés en étant uniformément répartis à la périphérie du plateau de serrage (1).

12. Dispositif suivant l'une des revendications 9-11, **caractérisé en ce qu'**il est prévu douze billes de serrage (18).

13. Dispositif suivant la revendication 9, **caractérisé en ce que** la gorge annulaire (28) du porte-pièce (25) qui fait tout le tour présente une section transversale essentiellement en forme de V.

14. Dispositif suivant l'une des revendications 9-13, **caractérisé en ce que** la position axiale de la gorge annulaire (28) qui fait tout le tour dans le porte-pièce (25) est déterminée d'une manière telle que les billes de serrage (18) du plateau de serrage (1) peuvent s'enfoncer dans la gorge annulaire (28) lorsque le porte-pièce (25) est posé librement sur le plateau de serrage (1 ), le plan de symétrie (S-S) de la gorge annulaire (28) se trouvant légèrement au-dessus du centre des billes de serrage (18) placées dans les perçages (19) du plateau de serrage (1).
